# EUROPEAN PATENT APPLICATION

(11) **EP 3 130 705 A1**
(43) Date of publication of application: **15.02.2017**
(21) Application number: 16184223.2
(22) Date of filing: 15.08.2016
(51) Int. Cl.: E01F 3/00, B64F 1/00

(54) **HELICOPTER LANDING STRUCTURE WITH INTEGRATED UTILITY DEVICES**

(30) Priority: 13.08.2015 NL 2015301
(71) Applicant: Bayards Aluminium Constructies B.V., 2957 CP New Lekkerland (NL)
(72) Inventor: Mackintosh, Dingenus Wilfried Siwart, 4635 RN Huijbergen (NL)
(74) Representative: Nederlandsch Octrooibureau

(57) **Abstract**

A helicopter landing structure, comprising: a structural layer (16) formed of first elongate profiles (2), and a utility layer (17), coextensive with the structural layer over at least a designated landing area for the helicopter, and the utility layer forming the upper surface (27) of the helicopter landing structure, the helicopter landing structure further including a plurality of elongate utility strips (6) at least partly accommodated within the utility layer.

## Description

### BACKGROUND OF THE INVENTION

### Field of the Invention

The invention relates to a helicopter landing structure with integrated utility devices, such as integrated lighting and/or heating strips, in particular a helideck with such utility devices.

### Description of the Related Art

A helicopter landing structure, such as a helicopter landing pad (helipad) or helicopter landing deck (helideck) provides a clearly marked hard surface away from obstacles where a helicopter can land safely. Large ships and oilrigs can have a helipad on board, usually referred to as a helicopter deck or helideck. Helicopter landing pads or decks are usually marked with a circle and/or an "H" that is clearly visible from the air, such that the helicopter pilot knows where to land. Due to safety regulations, the helicopter landing structures, in particular helidecks, are required to have the markings lighted, for instance for improved visibility in weather conditions with decreased clarity or at night.

For both existing helicopter landing structures and future helicopter landing structures, in particular helidecks, a usual manner to provide lighted markings is by mounting individual lights or lighting strips and the wiring in between onto the helideck. Thus, such markings and wiring form locally raised portions on the helideck that are vulnerable to damage by the landing helicopter and while using the helideck for (un)loading the helicopter with people and/or cargo. In addition, these raised portions could cause a person to trip and fall, thereby risking injuries.

Using covers may reduce the risk of damaging the lights or lighting and wiring, but may introduce even higher raised portions. Additionally, these covers can be damaged as well, introducing an additional risk for landing and ascending helicopters.

It would therefore be desirable to provide a helideck that overcomes the disadvantages of the prior art.

### BRIEF SUMMARY OF THE INVENTION

According to the invention, there is provided a helicopter landing structure, comprising: a structural layer formed of first elongate profiles, and a utility layer, coextensive with the structural layer over at least a designated landing area for the helicopter, and the utility layer forming the upper surface of the helideck, the helideck further including a plurality of elongate utility strips at least partly accommodated within the utility layer.

The utility layer forms an additional layer on top of the structural layer of the helicopter landing structure and extends over at least the designated landing area for the helicopter, i.e. the helicopter landing circle. The plurality of utility strips are accommodated at least partially within the utility layer such that the part of the utility strips extending past the upper surface of the utility layer is minimized. This reduces the risks of damaging the utility strips and of injuring by the users of the helideck or helipad. The at least partly accommodated utility strips have at least a lower portion enclosed by the utility layer, whereas an upper portion is exposed to the environment. Preferably, the utility strips are enclosed in the utility layer at three sides. Accommodating the utility strips in the structural layer would decrease the structural integrity of the helicopter landing structure and therefore would not be desirable.

Preferably, at least a part of an upper surface of the elongate utility strips lies flush with the upper surface of the helicopter landing structure. For instance where protruding lights are used. More preferably, the elongate utility strips are fully integrated within the utility layer to lie flush with the upper surface of the helicopter landing structure.

According to an embodiment, a sealing element is provided for sealing between the utility strip and the utility layer. The utility strips are connected to the utility layer, usually by means of a mechanical connection, i.e. screws or a bolt/nut set. Such a connection needs to be sealed for liquids, e.g. water, oil and/or kerosene. This can be done by means of a sealing cover comprising a first part that extends over at least part of the utility strip and a second part that extends over a part of the upper surface of the utility layer. Such a sealing cover can be a separate element, or can be integrated with the utility strip. Alternatively, or additionally, a sealant, a putty and/or paste can be used to seal any openings or slits between the utility strip and the utility layer.

According to an embodiment, the utility layer comprises a plurality of interconnected second elongate profiles that are individually connected to the structural layer. The utility layer can be formed from a plurality of interconnected second elongate profiles as a separate layer that covers at least part of the upper surface of the structural layer. The second elongate profiles are individually connected to the structural layer, for instance by means of at least one of an adhesive, a bolt/nut construction and riveting. Such an additional layer can be formed on any helicopter landing structure, i.e. helideck or helipad, newly built or existing. The utility strips are then accommodated within one or more second elongate profiles that form the utility layer, depending on their orientation and/or lateral dimensions.

In some cases, the structural layer comprises a textured upper surface, for instance a part of the surface ribbed or roughened in the longitudinal and/or lateral direction, and wherein the plurality of interconnected second elongate profiles are connected to the textured upper surface of the structural layer to prevent movement of the plurality of interconnected second elongate profiles in a lateral and/or longitudinal direction with respect to the structural layer. This increases the stability and safety of the landing structure, especially during construction of the utility layer.

The textured upper surface of the structural layer may be removed before putting the utility layer on the structural layer, but the texture of the upper surface may alternatively be used to prevent the utility layer to slide with respect to the structural layer. For this, a bottom surface of the elongate profiles of the utility layer may be provided with a corresponding textured surface, configured to engage the texture of the upper surface of the structural layer. For instance, when the upper surface of the structural layer is provided with protrusions, such as ribs, the bottom surface of the utility layer may be provided with recesses to accommodate these ribs, thereby securing the utility layer with respect to the structural layer in at least one direction.

According to another embodiment, the utility layer comprises a plurality of interconnected second elongate profiles and a first elongate profile of the structural layer and a second elongate profile of the utility layer are integrally formed as a single unit. The structural layer and the utility layer may also be integrally formed in a single elongate profile. The helicopter landing structure comprising a structural layer and a utility layer for integrating utility strips is then formed by interconnecting such single integrally formed elongate profiles. The utility strips are then accommodated within one or more second elongate profiles that form the utility layer, depending on their orientation and/or lateral dimensions.

According to a further embodiment, the first and/or second elongate profiles comprise a receiving element at a first longitudinal side and a protruding element at a second longitudinal side, wherein the first and/or second elongate profiles are interconnected by receiving the protruding element of an elongate profile in the receiving element of a further elongate profile. Such an interconnection between the elongate profiles can be used for the first elongate profiles forming the structural layer, for the second elongate profiles forming the utility layer and/or the structural and utility layer integrated in single elongate profiles. The interconnection may further be established by means of a clamping or a form fit connection between the protruding element and the receiving element, wherein for instance the protruding element is locked in the receiving element by means of a movement of one of the elongate profiles with respect to the other elongate profile. Additionally, at least one longitudinal side of the elongate profile may be provided with a sealing element extending over at least part of the longitudinal side. By interconnecting the elongate profiles over their longitudinal sides, the elongate profiles are then provided with a sealing along this interconnection. Sealing along the interconnection of the elongate profiles may prevent leakage of liquids, such as water, oil and/or kerosine, from the upper surface of the utility layer to other parts of the helicopter landing structure.

According to a further embodiment, the plurality of utility strips together form a H-shape within the utility layer. The H-shape has parallel longitudinal legs and a transverse part perpendicular to and in between the longitudinal legs. The orientation of the H-shape may be such that either the legs or the transverse part is oriented parallel to the elongate profiles of the utility layer. Such an orientation of the H-shape may facilitate the accommodation of the utility strips forming the H-shape within the utility layer.

According to an embodiment, the utility strips are lighting strips or heating strips. Lighting strips are used to provide good visibility in darker circumstances, such as during the night or with heavy clouding. Heating strips may be used to locally melt snow or other solid precipitation to improve visibility of the helicopter landing structure. The utility strips may also comprise other utility elements, such as a nozzle element or a tie-down element. Such utility elements may also be provided as individual utility elements, i.e. not comprised in a utility strip.

According to a further embodiment, the elongate profile of the structural layer comprises a plurality of first interior chambers formed by inner walls extending in at least a longitudinal direction of the elongate profile. The inner walls forming first interior chambers provide additional support to the exterior walls of the first elongate profiles and thus strengthen the structural layer. Preferably, the inner walls extend between an upper and a lower side of the elongate profile to form inner chambers extending in the longitudinal direction and from the upper to the lower side of the elongate profile. These inner chambers extending from the upper to the lower side of the first elongate profile may accommodate utility elements such as the nozzle element or the tie-down element that have an elongate shape with respect to the utility strip and may extend from a lower side of the elongate profile of the structural layer to the upper surface of the utility layer.

Preferably, the second elongate profile of the utility layer comprises inner walls extending in at least a longitudinal direction, thereby forming a plurality of second interior chambers in the second elongate profile. The second interior chambers have the advantage that the inner walls provide support to the exterior walls of the second elongate profiles while accommodating the utility strips and/or utility elements.

Alternatively, the utility layer may be formed of second elongate profiles, either individual profiles or integrated with the structural layer, that have a bottom side facing the structural layer and multiple ridges protruding from the bottom layer and away from the structural layer, each of the ridges having a free end, wherein the free ends form the upper surface of the utility layer. An alternative embodiment of the utility layer may be formed by elongate profiles that have an open structure, i.e. are not enclosed by an end wall on all sides. Such elongate profiles have at least one closed side, such as the bottom side, that functions as a base layer. From this base layer, multiple protrusions or ridges extend in a direction away from the bottom side. The ridges may be oriented in a longitudinal direction of the elongate profile. The ridges may be located at regular intervals or distributed randomly or evenly over the base layer, preferably according to a pattern. The free ends of the ridges or protrusions form the upper surface of the utility layer.

### BRIEF DESCRIPTION OF THE DRAWINGS

The features and advantages of the invention will be further appreciated upon reference to the following drawings of a number of exemplary embodiments, in which:
Figure 1 shows a top view of a helideck according to the invention.
Figure 2 shows a cross-sectional view of a first embodiment of the helideck according to the invention.
Figure 3 shows a cross-sectional view of a second embodiment of the helideck according to the invention.
Figure 4 shows a cross-sectional view of the second embodiment with utility elements integrated within the helideck.
Figure 5a shows a cross-sectional view of the first embodiment with lighting strips integrated within the helideck.
Figure 5b shows a cross-sectional view of the second embodiment with lighting strips integrated within the helideck.

### DESCRIPTION OF ILLUSTRATIVE EMBODIMENTS

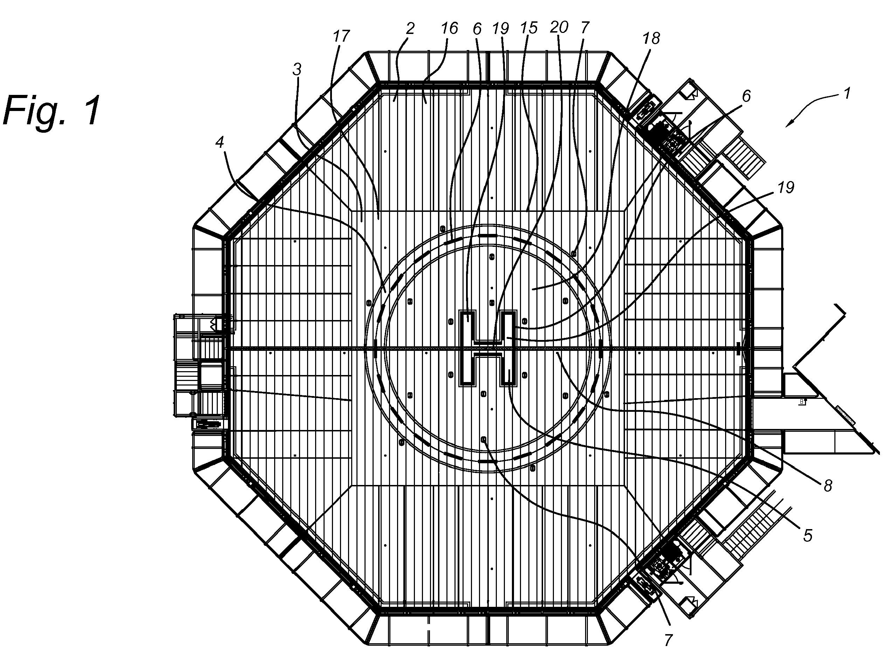

Figure 1 shows in top view of a helideck 1 according to the invention. The helideck 1 comprises a structural layer 16 comprising interconnected first elongate profiles 2 and a utility layer 17 comprising interconnected second elongate profiles 3. The utility layer 17 overlays, i.e. is coextensive with, the structural layer 16 at at least the landing area 18, and at most over the entire structural layer 16. The landing area 18 would comprise at least the area within the outer diameter of the illuminated landing circle 4. The helideck 1 is usually provided with a safety landing net 15 as well.

The landing area 18 is provided with a landing circle 4 that comprises a number of circular indications of that landing circle 4. One indication means is a lighting strip 6 that is provided near the circumference of the landing circle 4 and is used to illuminate the landing circle 4 when visibility of the helideck is decreased, e.g. during nighttime and/or bad weather conditions (rain, fog and the like). Additionally, the landing area 18 is provided with a landing indicator 5 shaped as an H. This H-shape 5 is provided with lighting strips 6 at its parallel longitudinal legs 19 and at a transversal part 20 extending between the parallel longitudinal legs 19.

The landing area 18 is further provided with utility elements 7,8, such as a nozzle element 8 being part of the fire extinguishing system of the helideck and tie-down points 7 for connecting any ropes, chains or the like to tie-down the helicopter

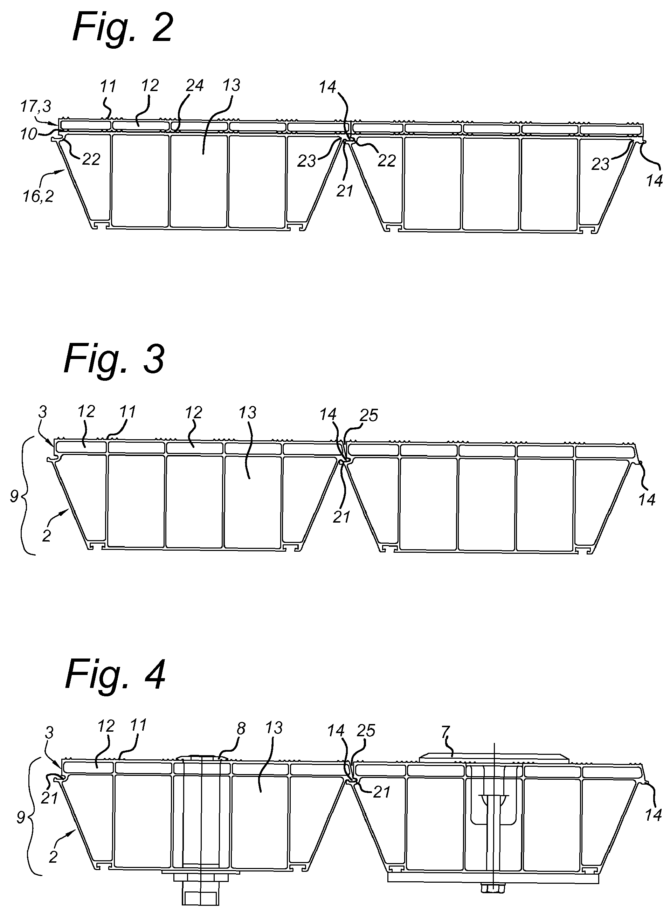

Figure 2 shows a cross-sectional view of a first embodiment of the helideck 1 according to the invention. This first embodiment of the helideck 1 is formed of a plurality of first elongate profiles 2 that form the structural layer 16 and a plurality of second elongate profiles 3 that form the utility layer 17. The second elongate profiles 3 of the utility layer 17 can be oriented similarly as the first elongate profiles 2 of the structural layer 16, such that the longitudinal directions of the elongate profiles are parallel relative to each other. This relative orientation of the first and second elongate profiles 2, 3 is shown in figure 2. An alternative orientation is that the second elongate profiles 3 of the utility layer 17 are positioned in a transverse direction to the first elongate profiles 2 of the structural layer 16.

The first elongate profiles 2 shown in figure 2 are interconnected by means of a receiving element 21 at a first longitudinal side 22 and a protruding element 14 at a second longitudinal side 23. Thus, each elongate profile 2 is provided with both a receiving element at one longitudinal side and a protruding element at the opposite longitudinal side. Connecting two or more such elongate profiles is performed by introducing the protruding element 14 of one elongate profile 2 into the receiving element 21 of another neighbouring elongate profile 2. The receiving and/or protruding elements 14, 21 may extend over the entire respective longitudinal side or may only extend over a part of the respective longitudinal side.

The second elongate profiles 3 are individually connected to the first elongate profiles 2 by means of an adhesive (not shown). Alternatively, bolts and nuts or riveting may be used for such a connection.

The structural layer 16 shown in figure 2 comprises a textured upper surface 10 provided with ribs 24. These ribs can be removed prior to connecting the second elongate profiles 3 to the upper surface of the structural layer. Alternatively, and shown in figure 2, the ribs 24 are used to prevent movement of the interconnected second elongate profiles 3 in a lateral and/or longitudinal direction with respect to the structural layer 16. This increases the stability and safety of the helideck 1, especially during construction of the utility layer 17.

The upper surface of the utility layer 3 is provided with ribs 11 as well. This added texture prevents slippery surfaces in wet conditions and increases the 'grip' of the landing area 18.

Figure 3 shows a cross-sectional view of a second embodiment of the helideck 1 according to the invention. In this embodiment, the first elongate profile 2 of the structural layer 16 and the second elongate profiles 3 of the utility layer 16 are integrally formed as a single unit 9, i.e. form a single third elongate profile 9. The third elongate profile 9 is provided with similar connection means 14, 21 as the separate first and second elongate profiles shown in figure 2. When an interlocking connection between the protruding element 14 and the receiving element 21 is used, such as in figure 3, at least one of the longitudinal sides of the third elongate profile 9 is provided with a slanted edge to obtain space for movement of a third elongate profile 9 with respect to another third elongate profile 9. A longitudinal recess 25 may thus be formed between the interconnected third elongate profiles 9.

Figure 4 shows a cross-sectional view of the second embodiment with utility elements integrated within the helideck. As shown in figures 2, 3 and 4, the first, second and third elongate profiles 2, 3, 9 are each provided with a plurality of first interior chambers 12, 13 formed by inner walls extending in at least a longitudinal direction of the elongate profile 2, 3, 9. The inner walls extend between an upper and a lower side of the elongate profile 2, 3, 9 to form inner chambers 12, 13 extending in the longitudinal direction and from the upper to the lower side of the elongate profile 2, 3, 9, i.e. in a vertical direction.

It is preferred that at least the inner walls extending in a vertical direction coincide to form coinciding inner chambers. This would facilitate the integration of utility elements 7,8 that extend from an upper surface of the utility layer into or beyond the structural layer, such as nozzles 8 and tie-down points 7, as shown in figure 4.

The second elongate profile 3 of the utility layer 16 comprises inner walls, i.e. separating walls 26, extending in at least a longitudinal direction, thereby forming a plurality of second interior chambers 12 in the second elongate profile 3. These inner walls provide additional strength to the second elongate profile 3, especially when the lighting strips 6 are accommodated in the utility layer.

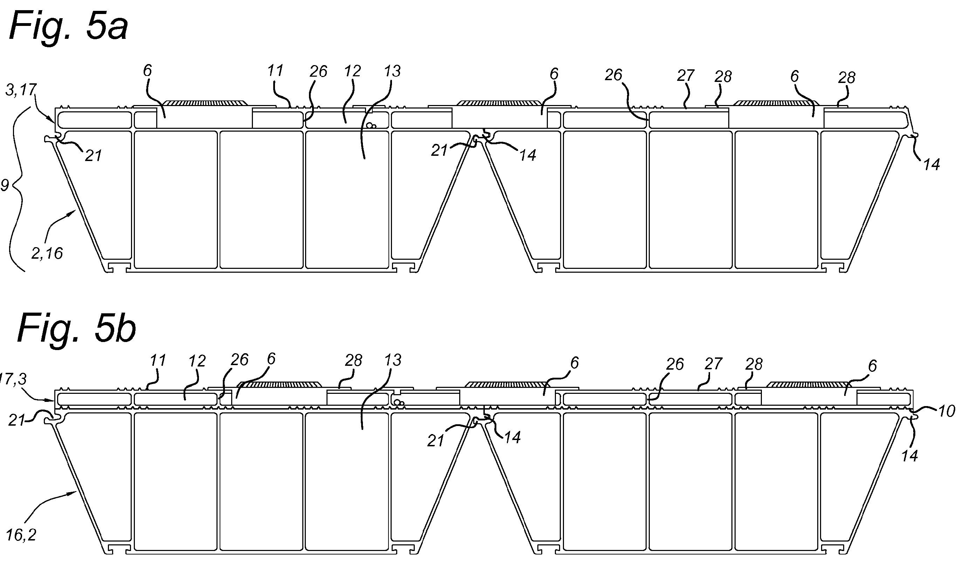

Figure 5a shows a cross-sectional view of the first embodiment with lighting strips 6 integrated within the utility layer 17 of the helideck 1. Figure 5b shows a cross-sectional view of the second embodiment with lighting strips integrated within the utility layer 17 of the helideck 1. The lighting strips 6 are accommodated within two adjacent inner chambers 12 of the second elongate profile 3 of the utility layer 17 by removing part of the upper surface 27 of the utility layer of the second elongate profile 3 and removing an inner separating wall 26 that separates two adjacent inner chambers 12 from each other. Depending on the dimensions, orientation and location, the lighting strips 6 can also be accommodated within one inner chamber 12. The lighting strips 6 are provided with extending flanges forming sealing covers 28 that extend over the upper surface 27 of the utility layer 17 to seal any remaining opening between the lighting strips 6 and the second elongate profile 3.

### LIST OF PARTS

1. Helideck
2. First elongate profile
3. Second elongate profile
4. Landing circle
5. H-shape
6. Lighting strip
7. Tie-down point
8. Nozzle
9. Third elongate profile / single unit
10. Upper surface structural layer
11. Ribs on utility layer
12. Inner chamber of utility layer
13. Inner chamber of structural layer
14. Protruding element
15. Safety net
16. Structural layer
17. Utility layer
18. Landing area
19. Legs of H-shape
20. Transverse part of H-shape
21. Receiving element
22. First longitudinal side
23. Second longitudinal side
24. Ribs on structural layer
25. Longitudinal recess
26. Separating wall
27. Upper surface of utility layer
28. Sealing cover

## Claims

1. A helicopter landing structure (1), comprising: a structural layer (16) formed of first elongate profiles (2), and a utility layer (17), coextensive with the structural layer over at least a designated landing area (18) for a helicopter, and the utility layer forming an upper surface (27) of the helicopter landing structure, the helicopter landing structure further including a plurality of elongate utility strips (6) at least partly accommodated within the utility layer.

2. Helicopter landing structure according to claim 1, wherein the elongate utility strips are fully integrated within the utility layer to lie flush with the upper surface of the helicopter landing structure.

3. Helicopter landing structure according to claim 1, wherein at least a part of an upper surface of the elongate utility strips lies flush with the upper surface of the helicopter landing structure.

4. Helicopter landing structure according to any of the preceding claims, wherein a sealing element (28) is provided for sealing between the utility strip and the utility layer.

5. Helicopter landing structure according to any of the preceding claims, wherein the utility layer comprises a plurality of interconnected second elongate profiles (3) that are individually connected to the structural layer.

6. Helicopter landing structure according to claim 5, wherein the plurality of interconnected second elongate profiles are connected to the structural layer by means of at least one of an adhesive, a bolt/nut construction and riveting.

7. Helicopter landing structure according to claim 5 or 6, wherein the structural layer comprises a textured upper surface (10), such that the plurality of interconnected second elongate profiles are prevented to move in a lateral and/or longitudinal direction with respect to the structural layer.

8. Helicopter landing structure according to any of claims 1-4, wherein the utility layer comprises a plurality of interconnected second elongate profiles (3) and wherein a first elongate profile of the structural layer and a second elongate profile of the utility layer are integrally formed as a single unit (9).

9. Helicopter landing structure according to any of the preceding claims, wherein the first and/or second elongate profiles comprise a receiving element (21) at a first longitudinal side and a protruding element (14) at a second longitudinal side, wherein the first and/or second elongate profiles are interconnected by receiving the protruding element of an elongate profile in the receiving element of a further elongate profile.

10. Helicopter landing structure according to any of the preceding claims, wherein the utility strips are lighting strips or heating strips.

11. Helicopter landing structure according to any of the preceding claims, wherein a plurality of utility strips together form a H-shape (5) within the utility layer.

12. Helicopter landing structure according to any of the preceding claims, wherein the first elongate profile of the structural layer comprises a plurality of first interior chambers (13) extending between an upper and a lower side of the elongate profile formed by inner walls extending in a longitudinal direction of the elongate profile and from the upper to the lower side of the elongate profile.

13. Helicopter landing structure according to any of the preceding claims, wherein the second elongate profile of the utility layer comprises a plurality of second interior chambers (12) extending between an upper and a lower side of the elongate profile formed by inner walls (26) extending in a longitudinal direction of the elongate profile and from the upper to the lower side of the elongate profile.
